# EUROPEAN PATENT APPLICATION

(11) **EP 1 679 531 A1**
(43) Date of publication of application: **12.07.2006**
(21) Application number: 04817414.8
(22) Date of filing: 25.10.2004
(51) Int. Cl.: G01V 1/00

(54) **DISASTER PREDICTION SYSTEM**

(30) Priority: 31.10.2003 JP 2003372815
(71) Applicant: MATSUSHITA ELECTRIC INDUSTRIAL CO., LTD., Kadoma-shi, Osaka 571-8501 (JP)
(72) Inventor: YAMANAKA, R., c/o Matsushita Electric Ind. Co. Ltd, Osaka 540-6319 (JP); MOTOZUKA, H., c/o Matsushita Electric Ind. Co Ltd, Osaka 540-6319 (JP); UESUGI, M., c/o Matsushita Electric Ind. Co Ltd, Osaka 540-6319 (JP)
(74) Representative: Grünecker, Kinkeldey, Stockmair & Schwanhäusser Anwaltssozietät
(86) International application number: PCT/JP2004/015785
(87) International publication number: WO 2005/043192

(57) **Abstract**

A disaster prediction system that provides a plurality of mobile communications apparatuses with a function for detecting abnormal signals that are effective in natural disaster prediction, manages location information for the mobile communications apparatuses and appropriately sets areas of natural disaster prediction, collects a plurality of abnormality detection signals from the mobile communications apparatuses, analyzes these signals per area of prediction, improves the accuracy of natural disaster occurrence prediction, and transmits natural disaster-related information to a plurality of mobile communications apparatuses present in the areas of prediction. In this system, a mobile terminal 200 is equipped with functions for detecting an electromagnetic signal which correlates with earthquake occurrence and which comes from underground and detecting an abnormal electromagnetic signal and a function for locating its present position, a location management apparatus 300 manages location information for a plurality of mobile terminals 200, and an earthquake prediction apparatus 400 appropriately sets the areas of prediction of earthquake occurrence, according to the location management information, and collects a plurality of abnormality detection signals from the mobile terminals 200, generates earthquake-related alert information based on analysis per area of prediction, and transmits that information to the mobile terminals 200.

## Description

### Technical Field

The present invention relates to a disaster prediction system that predicts the occurrence of natural disasters such as earthquake and flood.

### Background Art

As a system that provides information relating to natural disasters such as earthquake and flood, for example, the river information providing system described in Patent Document 1 is proposed. This river information providing system comprises a distribution server which processes necessary information so as to be easily comprehensible and distributes the information to a variety of platforms, an application server which acquires observation data on rainfall, water level, etc. and analyzes that data following predetermined items, and a DB server consisting of digital archives in which past river information and rainfall and other data processed in real time are stored, and this system quickly and reliably provides information that is crucial for the life and property of residents and river information.

Also, the system for predicting earthquake occurrence just before occurrence is proposed in Patent Document 2. In this system for predicting earthquake occurrence just before occurrence, earthquake precursor electromagnetism in a broad frequency band from DC band to VHF band, as a natural phenomenon which is empirically known to have a clear correlation with earthquake occurrence, is observed and measured by a plurality of measuring devices, and these measurements are signal processed as digital data by an earthquake precursor electromagnetism observation and display apparatus, wherein data indicative of an abnormal level is detected and alarm is generated. Such observation data obtained at a plurality of points is collected by the earthquake precursor electromagnetism information processing apparatus and correct earthquake prediction is made possible by receiving advice from research institutes.
Patent Document 1: Japanese Patent Application Laid-Open No.2002-269656
Patent Document 2: Japanese Patent Application Laid-Open No.2003-43153

### Disclosure of Invention

### Problems to be Solved by the Invention

However, in the river information providing system of the above Patent Document 1, in order to observe various kinds of information about weather conditions and hydrologic conditions, observation units are fixedly installed in areas of observation, each unit equipped with a radar rainfall observation section, a section for observing topography or the like, a telemeter observation section, an inland flood observation section, an optical fiber observation section, etc., but it is difficult to install the observation units in all areas of observation where observation is considered necessary. Particularly, in densely populated areas, ideally, information should be provided quickly to all residents in the area by increasing the number of observation units provided, but it is difficult for this system to support such area because of high installation cost of the observation units.

In the system for predicting earthquake occurrence just before occurrence of the above Patent Document 2, observation facilities constituted by the same specifications are fixedly installed in a plurality of places, so that information relating to earthquake prediction will be collected from the plurality of places, but this system has the same problem as noted above.

An object of the present invention is to provide a disaster prediction system that enables equipping a plurality of mobile communications apparatuses with functions for detecting abnormal signals that are effective in natural disaster prediction, managing location information for the plurality of mobile communications apparatuses and appropriately setting areas of natural disaster prediction, collecting a plurality of abnormality detection signals from the mobile communications apparatuses, analyzing these signals per area of prediction, improving accuracy in natural disaster occurrence prediction, and transmitting natural disaster-related information to a plurality of mobile communications apparatuses present in the areas of prediction.

### Means for Solving the Problem

In accordance with one aspect of the present invention, a disaster prediction system is provided in which a disaster prediction apparatus collects abnormality detection signals relating to a natural disaster from a plurality of mobile communications apparatuses via a wireless communications network and provides information related to the natural disaster analyzed by the disaster prediction apparatus to the mobile communications apparatuses via the wireless communications network, and this disaster prediction system employs a configuration having: the mobile communications apparatuses, each mobile communications apparatus comprising: a location detection section that locates a present position; an abnormal signal detection section that receives an electromagnetic signal coming from a natural world, detects an abnormal signal and outputs an abnormality detection signal; a first communications section that transmits the present position to a location management apparatus via the wireless communications network, transmits the abnormality detection signal to the disaster prediction apparatus via the wireless communications network, and receives the information related to the natural disaster from the disaster prediction apparatus via the wireless communications network; and an alerting section that alerts the information related to the natural disaster received by the first communications section; the location management apparatus receives present positions from the plurality of mobile communications apparatuses via the wireless communications network and manages location information of each mobile communications apparatus; and the disaster prediction apparatus, comprising: a second communications section that receives abnormality detection signals from the plurality of mobile communications apparatuses via the wireless communications network, receives the location information of each mobile communications apparatus from the location management apparatus via the wireless communications network, and transmits the information related to the natural disaster to the plurality of mobile communications apparatuses via the wireless communications network; a disaster prediction section that collects and analyzes the abnormality detection signals received from the plurality of mobile communications apparatuses per area based on the location information and predicts occurrence of the natural disaster per area; and an information generating section that generates the information related to the natural disaster based on results of prediction by the disaster prediction section.

### Advantageous Effect of the Invention

According to the present invention, it is possible to realize a disaster prediction system at low cost that enables managing location information for a plurality of mobile communications apparatus and appropriately setting areas of natural disaster prediction, collecting a plurality of abnormality detection signals from these mobile communications apparatuses, analyzing these signals per area of prediction, improving the accuracy of predicting natural disaster occurrence prediction, and transmitting natural disaster-related information to a plurality of mobile communications apparatus present in the areas of prediction.

### Brief Description of Drawings

FIG.1 is a diagram showing an overall configuration of a disaster prediction system according to a first embodiment of the present invention;
FIG.2 is a block diagram showing the internal configurations of a wireless communications section and control section in the disaster prediction system according to the first embodiment;
FIG.3 is a block diagram showing the internal configuration of an abnormal signal detection section in the disaster prediction system according to the first embodiment;
FIG.4 is a block diagram showing the internal configuration of a location detection section in the disaster prediction system according to the first embodiment;
FIG.5 is a block diagram showing the internal configuration of an operation section using vibration according to the first embodiment;
FIG.6 is a block diagram showing the internal configuration of an operation section using light according to the first embodiment;
FIG.7 is a block diagram showing the internal configuration of an operation section using sound according to the first embodiment;
FIG.8 is a block diagram showing the internal configuration of an operation section using images according to the first embodiment;
FIG.9 is a block diagram showing the internal configuration of a location management apparatus according to the first embodiment;
FIG.10 is a diagram showing an example of a user management database which is stored in a storage section of the location management apparatus according to the first embodiment;
FIG.11 is a block diagram showing the internal configuration of an earthquake prediction apparatus in the disaster management system according to the first embodiment;
FIG.12 is a diagram showing an example of a user report database which is stored in a storage section of the earthquake prediction apparatus according to the first embodiment;
FIG.13 is a diagram showing a more concrete example of a configuration of the disaster prediction system according to the first embodiment;
FIG.14 is a diagram showing an example of an electromagnetic signal detected at a mobile terminal according to the first embodiment;
FIG.15 is a block diagram showing the internal configuration of an abnormal signal detection section according to a second embodiment of the present invention;
FIG.16 is a diagram showing an example of an electromagnetic signal and exemplary count values to explain the operation of the abnormal signal detection section according to the second embodiment;
FIG.17 is a block diagram showing the internal configuration of an abnormal signal detection section according to a third embodiment of the present invention;
FIG.18 is a diagram showing an example of a user report database which is stored in a storage section of the abnormal signal detection section according to the third embodiment;
FIG.19 is a flowchart illustrating an earthquake prediction process which is executed by a prediction section of the earthquake prediction apparatus according to the first embodiment;
FIG.20 is a diagram showing exemplary count values 1 and exemplary count values 2 to explain the operation of the abnormal signal detection section according to the third embodiment;
FIG.21A is a diagram showing an example of disaster spreading over time and its strength change from one zone to another according to the first embodiment;
FIG.21B is a diagram showing alert information examples which are displayed in the earthquake prediction process according to the first embodiment;
FIG.22A is a diagram showing a manner of managing the present positions of mobile terminals in another embodiment of the present invention; and
FIG.22B is a diagram showing another manner of transmitting alert information to mobile terminals in yet another embodiment of the present invention.

### Best Mode for Carrying Out the Invention

Now, embodiments of the present invention will be described in detail below with reference to the accompanying drawings.

### (First Embodiment)

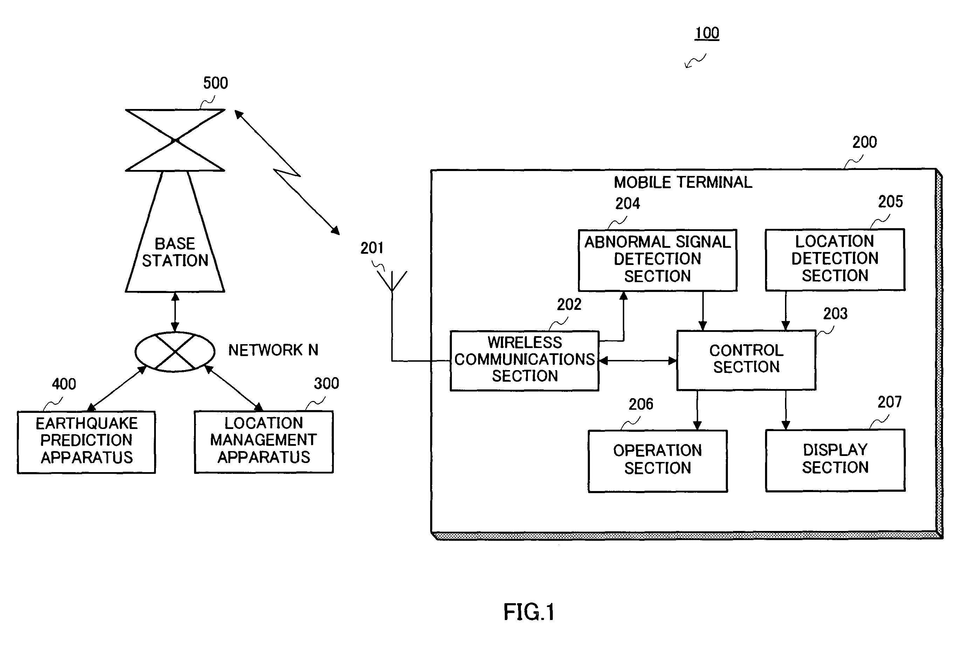

A case will be described below with the present embodiment where occurrence of an earthquake as a natural disaster is predicted. FIG.1 is a diagram showing an overall configuration of a disaster prediction system according to a first embodiment of the present invention. The disaster prediction system 100 comprises a mobile terminal (mobile communications apparatus) 200, a location management apparatus 300, an earthquake prediction apparatus 400, and a base station 500, where the location management apparatus 300 and the earthquake prediction apparatus 400 are connected to the base station 500 via a network N.

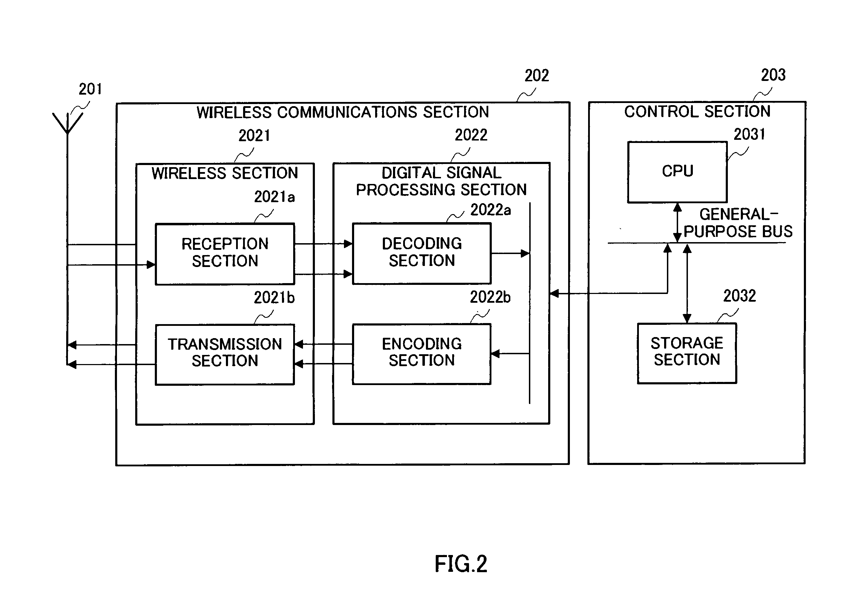

The mobile terminal 200, as shown in FIG.1, is mainly composed of an antenna 201, a wireless communications section 202, an abnormal signal detection section 204, a location detection section 205, an operation section 206, and a display section 207. The wireless communications section 202 has wireless communications functions adapted for various types of cellular communications such as IMT2000 and GSM as prescribed wireless communications standards, various types of specific low-power communications such as wireless LAN, Bluetooth (R), and UWB (Ultra Wide Band), or terrestrial digital broadcasting or the like, and is composed of a wireless section 2021 and a digital signal processing section 2022, as shown in FIG.2. Furthermore, the wireless section 2021 is composed of a reception section 2021a and transmission section 2021b, and a signal which is transmitted from the base station 500 is received by the reception section 2021a and output to the digital signal processing section 2022, and a transmission signal, which is input from the digital signal processing section 2022, is transmitted by the transmission section 2021b through the antenna 201 to the base station 500.

The digital signal processing section 2022, as shown in FIG.2, is composed of a decoding section 2022a and an encoding section 2022b, where the output side of the decoding section 2022a and the input side of the encoding section 2022b are connected via a general-purpose bus to a general-purpose bus within the control section 203. A received signal input from the reception section 2021a of the wireless section 2021 is decoded by the decoding section 2022a and output to the control section 203, and a transmission signal input from the control section 203 is encoded by the encoding section 2022b and output to the transmission section 2021b of the wireless section 2021.

The control section, as shown in FIG.2, is composed of a CPU (Central Processing Unit) 2031 and a storage section 2032, and the CPU 2031 and the storage section 2032 are connected via the general-purpose bus and this general-purpose bus is connected to the general-purpose bus within the wireless communications section 202. The CPU 2031 controls the wireless communications section 202, based on control programs stored in the storage section 2032, transmits present position information which is input from the location detection section 205, information specific to the mobile terminal 200 (user identification information, IPaddress, etc.), and an abnormality detection signal which is input from the abnormal signal detection section 204 through the encoding section2022b and the transmission section 2021b to the location management apparatus 300 and the earthquake prediction apparatus 400, outputs earthquake-related alert information which is input from the decoding section2022, after received from the earthquake prediction apparatus 400, to the operation section 206 and the display section 207, and makes the operation section 206 execute an alerting operation (issuing the alert by vibration, light, sound, or the like) and the display section 207 execute an alert information displaying operation. The storage section 2032 stores control programs which are executed by the CPU 2031, control data, and the like.

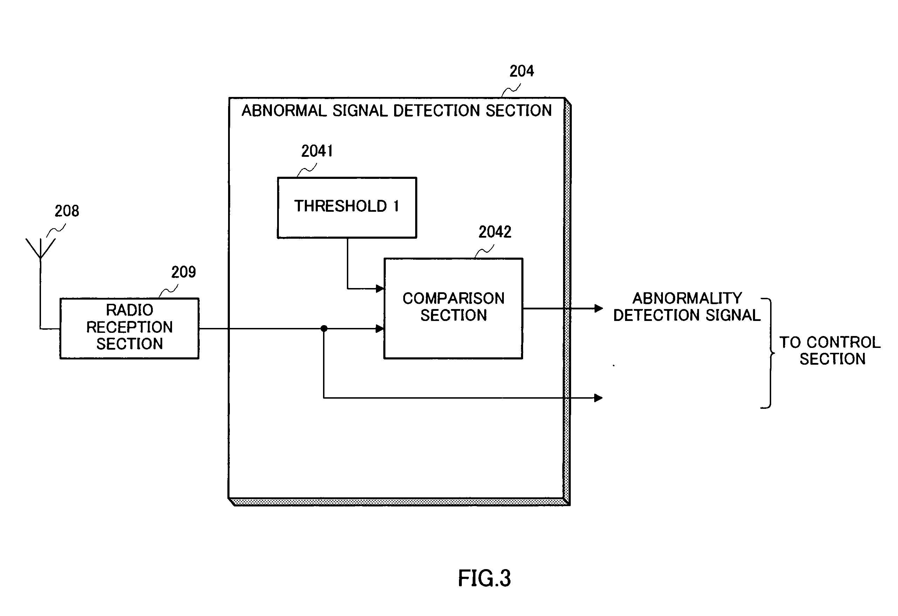

The abnormal signal detection section 204 is composed of a storage section 2041 for storing threshold 1 and a comparison section 2042, as shown in FIG.3, and an antenna 208 for receiving electromagnetic signals which correlate with earthquake occurrence and a radio reception section 209 which processes the electromagnetic signals are connected to the exterior. The abnormal signal detection section 204 outputs to the control section 203 an electromagnetic signal which is received by the radio reception section 209 and an abnormality detection signal which is generated when an electromagnetic signal level received by the comparison section2042 is compared to the threshold 1 stored in the storage section 2041 and the electromagnetic signal level exceeds the threshold 1.

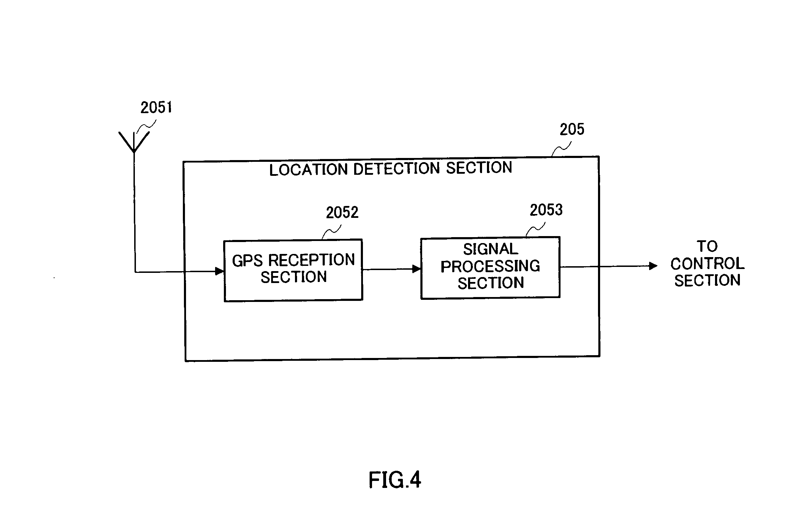

The location detection section 205 is composed of a GPS antenna 2051 adapted for GPS (Global Positioning System), a GPS reception section 2052, and a signal processing section 2053, as shown in FIG.4, and receives a GPS signal by the GPS antenna 2051 and the GPS reception section 2052, generates present position information (latitude and longitude) of the mobile terminal 200 by the signal processing section 2053, and outputs that information to the control section 203.

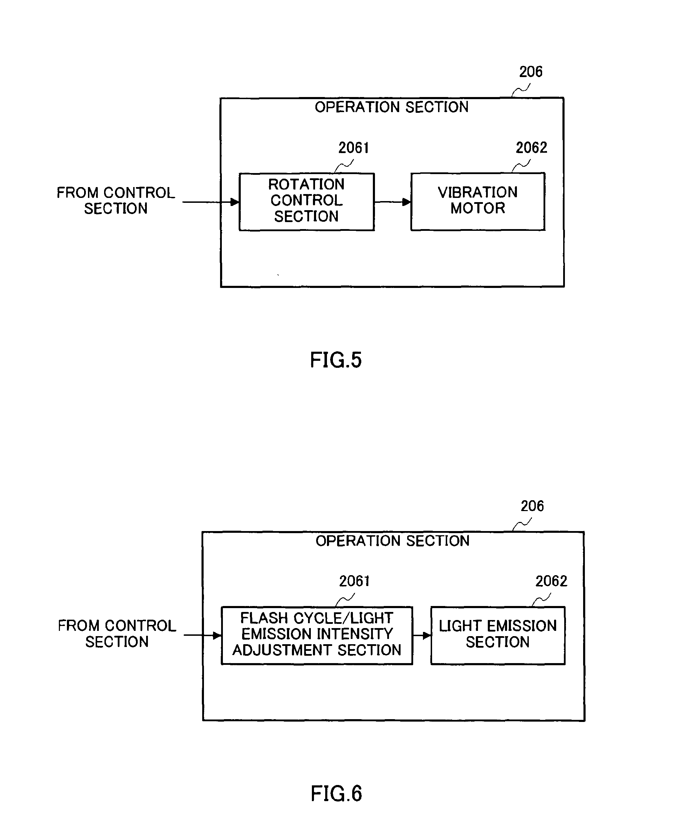

The operation section 206 is composed of a rotation controller 2061 and a vibration motor 2062, as shown in FIG.5. The rotation controller 2061 controls the vibration strength or cycle of the vibration motor 2062 in accordance with earthquake-related alert information input from the control section 203.

The operation section 206 may be configured differently, such as shown in FIG.6 through FIG.8. FIG.6 shows a configuration example where the alerting operation is performed by light and the operation section is composed of a flash cycle/light emission intensity adjustment section 2061 and a light emission section 2062. The flash cycle/light emission intensity adjustment section 2061 generates a flash cycle control signal or a light emission intensity control signal in accordance with the earthquake-related alert information which is input from the control section 203, outputs that signal to the light emission section 2062 and changes the flash cycle or light emission intensity of the light emission section 2062 stepwise.

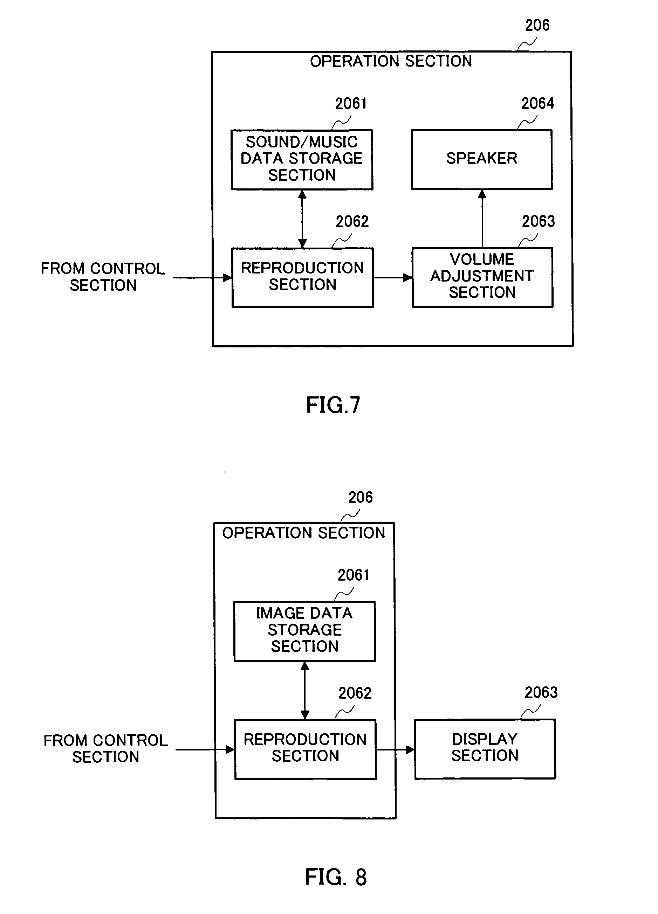

The operation section 206 which is shown in FIG.7, as a configuration example where the alerting operation is performed by sound, is composed of a sound/music data storage section 2061, a reproduction section 2062, a volume adjustment section 2063, and a speaker 2064. In this case, in the sound/music data storage section 2061, PCM (Pulse CodeModulation) data, MP3 (MPEGAudio Layer-3) data, AAC (Advanced Audio Coding) data, or the like is to be stored as sound/music data. Also, it may be preferable that the user's preferred sound and music can be stored in the sound/music data storage section 2061.

The reproduction section 2062 reads and decodes sound/music data stored in the sound/music data storage section 2061 in accordance with the earthquake-related alert information which is input from the control section 203 and outputs a reproduced sound signal and a volume adjustment signal to the volume adjustment section 2063. The volume adjustment section 2063 changes the volume of music/sound which is sounded by the speaker 2064 stepwise in accordance with the reproduced sound signal and the volume adjustment signal which are input from the reproduction section 2062.

The operation section 206 which is shown in FIG.8, as a configuration example where the alerting operation is performed by image display, is composed of an image data storage section 2061 and a reproduction section 2062, with a display section 2063 connected to the exterior. In this case, in the image data storage section 2061, still images such as pictured images and animations (e.g., bitmap, JPEG (Joint Photographic Experts Group), dynamic picture images such as MPEG (Moving Picture Experts Group) or the like, are to be stored. Also, it may be preferable that the user's preferred images and animations can be stored in the image data storage section 2061. The display section 2063 is constructed with a liquid crystal panel, EL (electroluminescence) panel or the like.

The reproduction section 2062 reads and decodes image data or animation data stored in the image data storage section 2061 in accordance with the earthquake-related alert information which is input from the control section 203 and outputs the result as a reproduced image signal to the display section 2063. The display section 2063 displays an image corresponding to the reproduced image signal which is input from the reproduction section 2062. In the present description, the display section 2063 and the display section 207 which is connected to the control section 203 are described as separate ones for ease of explanation. However, the invention can be carried out in the same way even if a common display section is used.

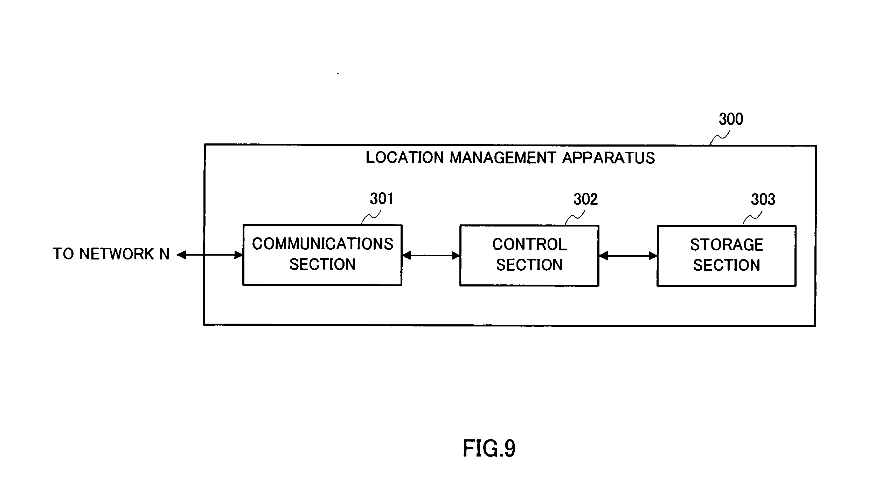

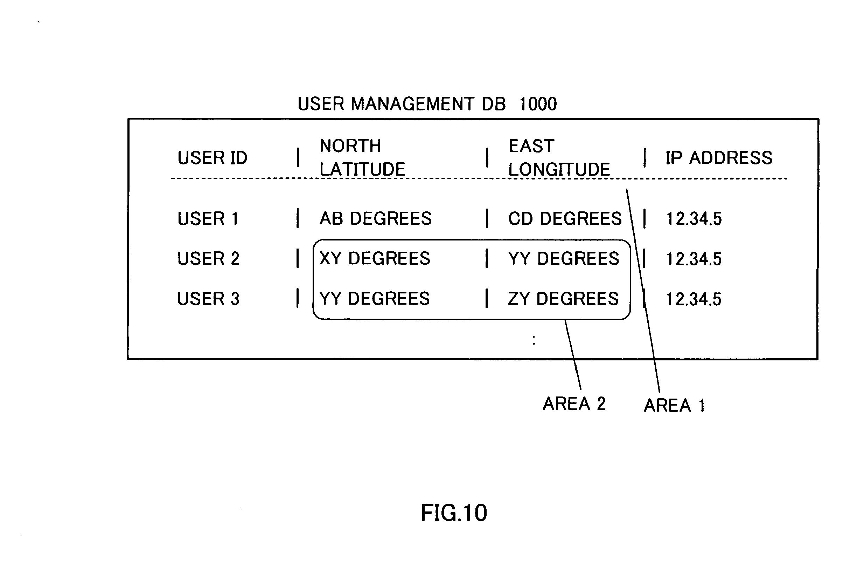

The location management apparatus 300 is composed of a communications section 301, a control section 302, and a storage section 303, as shown in FIG.9. The communications section 301 connects to the network N, receives present position information (latitude and longitude) and information specific to a mobile terminal 200 (user information, IP address, etc.) which are transmitted from the mobile terminal 200 via the base station 500 and outputs them to the control section 302, and transmits user management database information which is input from the control section 302 to the earthquake prediction apparatus 400 via the network N. The control section 302 performs user management processing, based on a user management program stored in the storage section 303, and stores the present position information (latitude and longitude) and the information specific to the mobile terminal 200 (user identification information, IP address, etc.) which are input from the communications section 301 into a user management database 1000, which is shown in FIG.10, stored in the storage section 303.

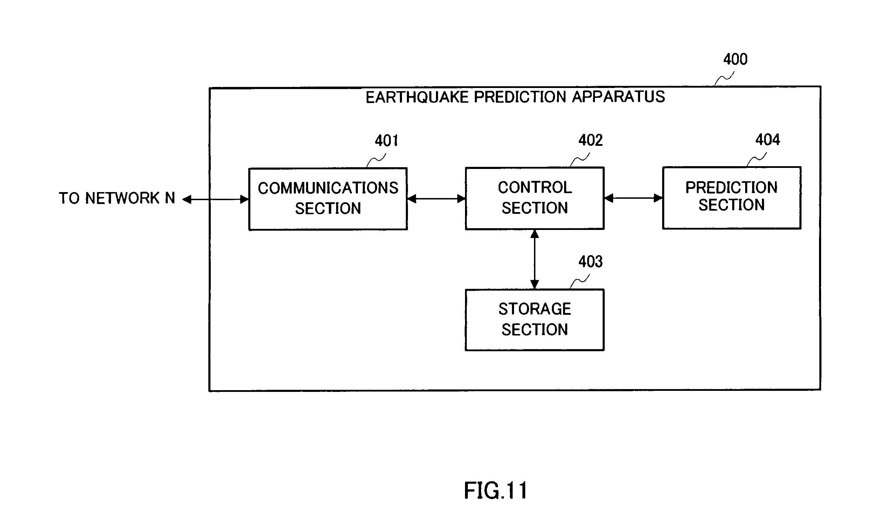

The earthquake prediction apparatus 400 is composed of a communications section 401, a control section 402, a storage section 403, and a prediction section 404, as shown in FIG.11. The communications section 401 connects to the network N, outputs an abnormality detection signal, which is transmitted from a mobile terminal 200 via the base station 500, to the control section 402, receives user management database information which is transmitted from the location management apparatus 300 via the network N and outputs it to the control section 402, and transmits earthquake-related alert information which is input from the control section 402 to mobile terminals 200 via the network N and the base station 500.

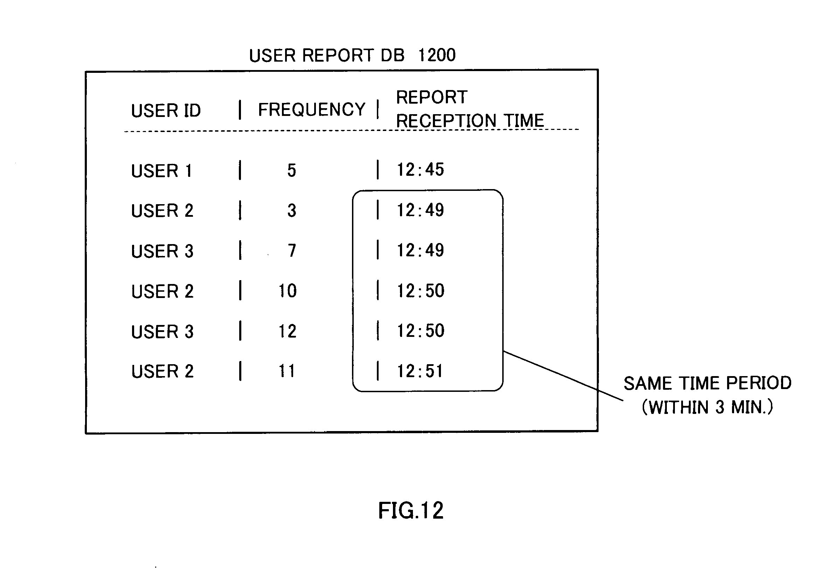

The control section 402 stores the abnormality detection signal received from the mobile terminal 200 and the user management database information received from the location management apparatus 300, which are input from the communications section 401, together with reception time, in a user report database 1200 shown in FIG.12, and, moreover, extracts the frequency of reports of abnormality detection signals for each user in the same time period, stored in this user report database 1200, and outputs them to the prediction section 404, generates earthquake-related alert information based on results of earthquake occurrence prediction predicted by the prediction section 404 and outputs the alert information to the communications section 401, and transmits the alert information from the communications section 401 to the mobile terminals 200 in the relevant area of prediction. The storage section 403 stores the user report database 1200 shown in FIG.12.

The prediction section 404 sets areas of prediction, based on the user management database information received from the location management apparatus 300, which is input from the control section 402, predicts the seismic intensity and time of occurrence of earthquake and the like for each of the set areas of prediction, based on the frequency of reports of abnormality detection signals received from a plurality of mobile terminals 200, and outputs the prediction results to the control section 402.

The base station 500 has functions that perform wireless communications with a mobile terminal 200 adaptively for diverse cellular communications such as IMT2000 and GSM, various types of specific low-power communications such as wireless LAN, Bluetooth (R), and UWB (Ultra Wide Band), or terrestrial digital broadcasting or the like and functions for performing cable communications with the location management apparatus 300 and the earthquake prediction apparatus 400 by connecting to the network N comprising telephones, LAN, Internet and the like. The network N is composed of a telephone line network, LAN network, Internet network, and the like.

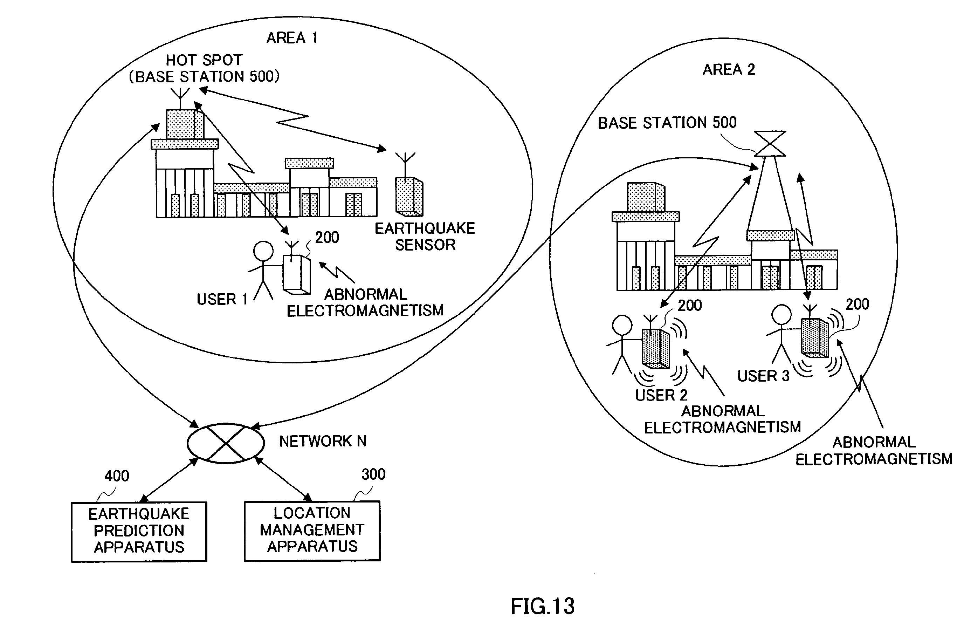

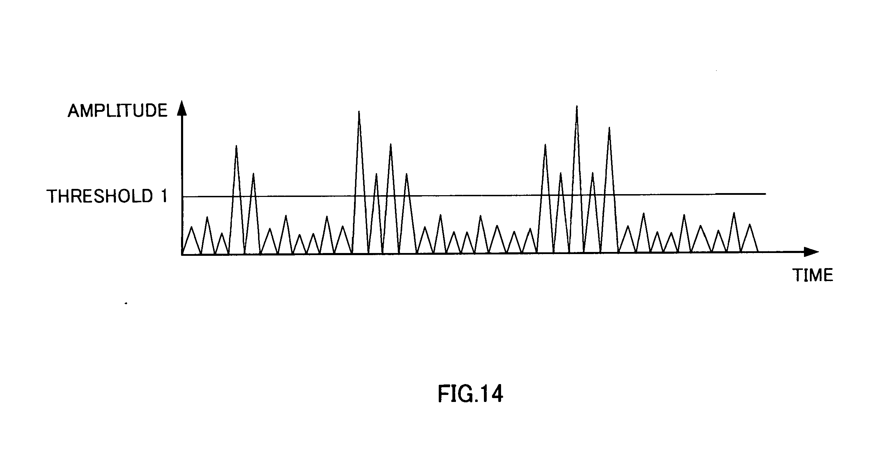

Next, how the mobile terminal 200, the location management apparatus 300, and the earthquake prediction apparatus 400 operate in the disaster prediction system 100 will be described with reference to FIG. 13 and FIG. 14. FIG.13 is a diagram showing a more concrete example of a configuration of the disaster prediction system 100, where a plurality of users 1 to 3 carrying their mobile terminals 200 are present in an area 1 around a base station of a hot spot (wireless LAN) and an area 2 around a base station 500 for mobile phones and each base station 500 in these areas 1, 2 is connected to the location management apparatus 300 and the earthquake prediction apparatus 400 via the network N. FIG.14 is a diagram showing an example of an electromagnetic signal detected at a mobile terminal 200.

In FIG.13, each mobile terminal 200 that the users 1 to 3 carry always receives an electromagnetic signal which comes from underground by its internal radio reception section 209 and always detects the electromagnetic signal level by the abnormal signal detection section 204, and, as shown in FIG.14, compares the detected electromagnetic signal level to the threshold 1 stored in the storage section 2041, outputs an abnormality detection signal, if the electromagnetic signal level exceeds the threshold 1, and transmits the abnormality detection signal to the base station 500 in either of the current areas 1, 2 by the wireless communications section 202.

Each mobile terminal 200 that the users 1 to 3 carry also locates its present position by the location detection section 205 on a regular basis and transmits the located present position information and the information specific to the mobile terminal 200 (user identification information, IP address, etc.) to the base station 500 by the wireless communications section 202. The base station 500 in each area 1 and 2 transmits the abnormality detection signal received from the mobile terminal 200 to the earthquake prediction apparatus 400 via the network N and transmits the present position information (latitude and longitude) and the information specific to the mobile terminal 200 (user identification information, IP address, etc.) received from the mobile terminal 200 to the location management apparatus 300 via the network N.

The location management apparatus 300 receives the present position information (latitude and longitude) and the information specific to the mobile terminal 200 (user identification information, IP address, etc.), which are transmitted from the mobile terminal 200 via the base station 500, by the communications section 301, stores the present position information (latitude and longitude) and the information specific to the mobile terminal 200 (user identification information, IP address, etc.), which are received, into the user management database 1000 (see FIG.10) in the storage section 300 by the control section 302, and updates the information for the same user, if already stored. Each time the location management apparatus 300 updates the stored contents of the user management database 1000, the location management apparatus 300 transmits the user management database information to the earthquake prediction apparatus 400 via the network N by the communications section 301.

The earthquake prediction apparatus 400 receives the abnormality detection signal, which is transmitted from the mobile terminal 200 via the base station 500, by the communications section 401, receives the user management database information from the location management apparatus 300, and stores the abnormality detection signal and the user management database information, which are received, into the user report database 1200 (see FIG.12) in the storage section 403 by the control section 402. The control section 402 extracts the frequency of reports of abnormality detection signals of the users in the same time period (e.g., within three minutes), as shown in FIG.12, from among the data stored in the user report database 1200 and outputs them to the prediction section 404.

The prediction section 404 sets areas of prediction (areas 1, 2), based on the user management database information received from the location management apparatus 300, which is input from the control section 402, predicts the seismic intensity and occurrence of time of earthquake and the like for each of the set areas of prediction, based on the frequency of reports of abnormality detection signals received from a plurality of mobile terminals 200, and outputs the prediction results to the control section 402.

The control section 402 generates earthquake-relatedalertinformation based on the results of the earthquake occurrence prediction predicted by the prediction section 404 and outputs the alert information to the communications section 401, and transmits the alert information from the communications section 401 to the mobile terminals 200 in the relevant areas 1 and 2 via the base station 500. Each mobile terminal 200 in each area 1 and 2 receives the earthquake-related alert information transmitted from the earthquake prediction apparatus 400 by the wireless communications section 202, executes an alerting operation of an operation section 206 (bywayof vibration strengthor cycle, stepwise change of light flash cycle or light emission intensity, stepwise change of music/sound volume, image display, and the like) in accordance with the earthquake-related alert information received from the control section 203, and issues the alert content to the users 1 to 3.

When issuing the alert information, the operation section 206 alerts the information including the seismic intensity and time of occurrence of earthquake and the like by way of vibration, light, sound, images, and the like. Moreover, it may also be preferable to inform the user of an evacuation route to a refuge place existing near the present position of the user by using the GPS function. Even if the alert information is received while the user of the mobile terminal 200 is engaged in a call, it is ensured that the above alerting operation is executed to send the alert information to the user reliably.

As described above, according to the disaster prediction system 100 of the present embodiment, the mobile terminal 200 is equipped with functions for detecting an electromagnetic signal which correlates with earthquake occurrence and which comes from underground and detecting an abnormal electromagnetic signal and function for locating its present position, the location management apparatus 300 manages location information for a plurality of mobile terminals 200, and the earthquake prediction apparatus 400 appropriately sets the areas of prediction of earthquake occurrence according to the location management information, and collects a plurality of abnormality detection signals from the plurality of mobile terminals 200, generates earthquake-relatedalert information based on analysis per area of prediction, and transmits that information to the mobile terminals 200. Consequently, it is possible to set more areas of prediction at ease and at low cost than conventional disaster prediction systems, improve the accuracy of disaster prediction, reliably alert the earthquake-related alert information to the users of the mobile terminals 200, and improve the reliability of the system.

### (Second Embodiment)

In the present embodiment, another example of a configuration of the abnormal signal detection section 204 shown in FIG.3 in the above first embodiment is discussed.

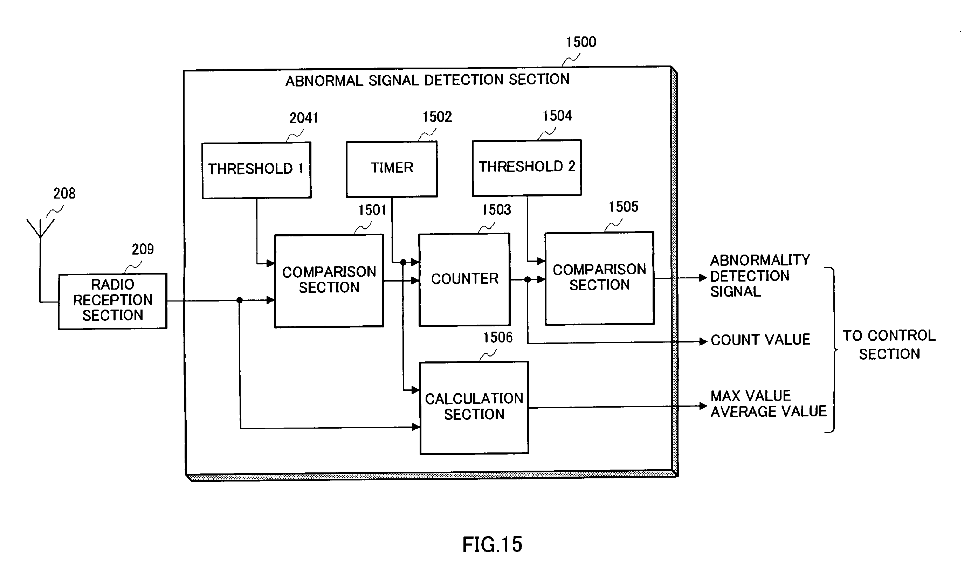

FIG.15 is a diagram showing an essential configuration of an abnormal signal detection section 1500 of the present embodiment, where the same components as those of the abnormal signal detection section 204 shown in FIG.3 are assigned the same reference numerals and their explanations are omitted. The abnormal signal detection section 1500 is composed of a first storage section 2041, a first comparison section 1501, a timer 1502, a counter 1503, a second storage section 1504, a second comparison section 1505, and a calculation section 1506.

The first comparison section 1501 compares an electromagnetic signal level received by the radio reception section 209 to the threshold 1 stored in the first storage section 2041 and outputs a comparison detection signal 1 to the counter 1503 if the electromagnetic signal level exceeds the threshold 1. The timer 1502 measures the time that sets the operation cycle of the counter 1503 and the calculation section 1506 and outputs the measurement time to the counter 1503 and the calculation section 1506.

The counter 1503 counts the number of times comparison detection signal 1 is input from the first comparison section 1501 in the measurement time which is input from the timer 1502 and outputs the count value to the second comparison section 1505 and the control section 203 in FIG.1. The second storage section 1504 stores a threshold 2 against which the second comparison section 1505 makes a comparison.

The second comparison section 1505 compares the count value input from the counter 1503 to the threshold 2 stored in the second storage section 1504 and outputs an abnormality detection signal to the control section 203 in FIG.1 if the count value is greater than or equal to the threshold 2. The calculation section 1506 calculates the maximum value and average value of the electromagnetic signal level received by the radio reception section 209 within the measurement time which is input from the timer 1502 and outputs the maximum value and average value to the control section 203 in FIG.1.

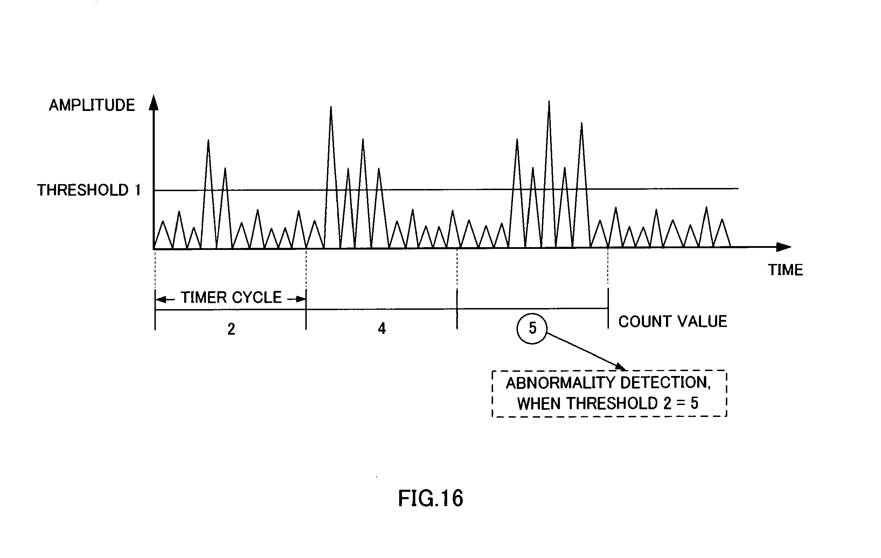

Aconcrete example of operation in the abnormality detection section 1500 is described with reference to FIG.16. In FIG.16, a given period of time that is preset by the timer 1502 is shown as a timer cycle, under which a count value of the counter 1503 is shown, and here is an example where the threshold 2 = 5.

The abnormal signal detection section 1500 compares the electromagnetic signal level received from the radio reception section 209 to the threshold 1 stored in the first storage section 2041 by the first comparison section 1501 and outputs a comparison detection signal 1 to the counter 1503 if the electromagnetic signal level exceeds the threshold 1. The counter 1503 counts the number of times comparison detection signal 1 is input in a timer cycle and outputs the count value to the second comparison section 1505 and the control section 203 in FIG.1.

The second comparison section 1505 compares the count value which has been input from the counter 1503 to the threshold 2 = 5 and outputs an abnormality detection signal to the control section 203 in FIG.1, if the count value is greater than or equal to the threshold 2 (it is indicated in FIG.16 that the count value has reached "5" within the period of the third timer cycle). The calculation section 1506 calculates the maximum value and average value of the electromagnetic signal level received by the radio reception section 209 in a timer cycle and outputs the maximum value and average value to the control section 203 in FIG.1.

Then, the control section 203 outputs the abnormality detection signal, the count value, and the maximum value and average value of the electromagnetic signal level, which are input from the abnormal signal detection section 1500, to the wireless communications section 202 and transmits them from the wireless communications section 202 to the earthquake prediction apparatus 400 via the base station 500 and the network N.

The earthquake prediction apparatus 400 receives the abnormality detection signal, the count value, and the maximum value and the average value of the electromagnetic signal level, which are output by the abnormal signal detection section 1500, from the mobile terminal 200 by the communications section 401, upon receiving user management database information from the location management apparatus 300, stores that information in the user report database (not shown) in the storage section 403 by the control section 402, and sets areas of prediction from the user management database information, analyzes the abnormality detection signals, the count values, and the maximum values and average values of the electromagnetic signal level received from a plurality of mobile terminals 200 in the same time period, for each of the set areas of prediction, and predicts the seismic intensity and time of occurrence of earthquake and the like, by the prediction section 404.

As described above, the abnormal signal detection section 1500 of the present embodiment outputs the number of times the electromagnetic signal level exceeds the threshold 1 in a timer cycle, the abnormality detection signal which is output if the number of times is greater than or equal to the threshold 2, and the maximum value and the average value of the electromagnetic signal level, and the earthquake prediction apparatus 400 analyzes the abnormality detection signals, count values, and the maximum values and average values of the electromagnetic signal level received from a plurality of mobile terminals 200 in the same time period, for each area of prediction, and predicts the seismic intensity and time of occurrence of earthquake and the like. Consequently, it is possible to perform earthquake prediction with higher accuracy.

### (Third Embodiment)

In the present embodiment, an example of a variant configuration of the abnormal signal detection section 1500 shown in FIG.15 in the above second embodiment and another earthquake prediction processing of the earthquake prediction apparatus 400 are discussed.

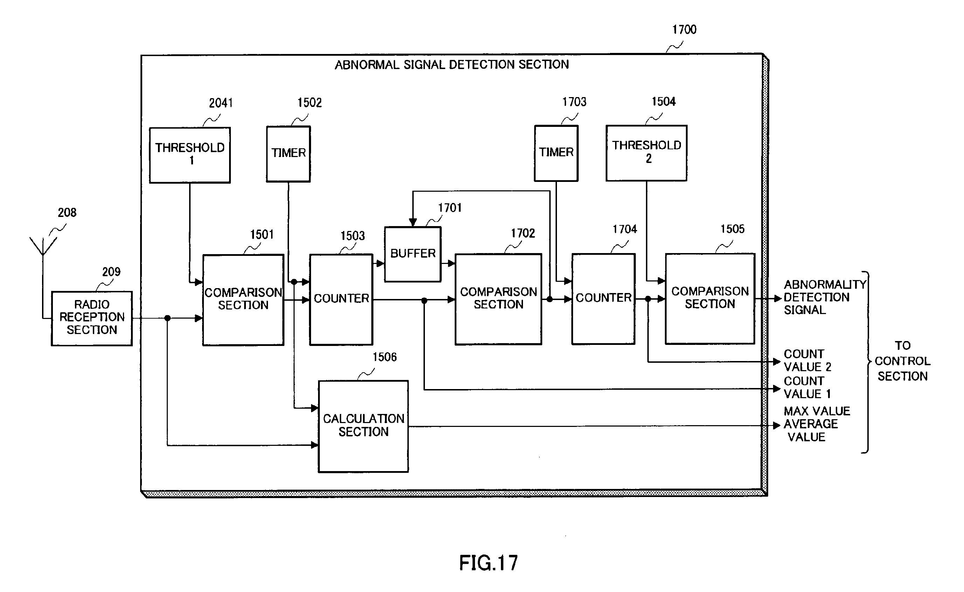

FIG.17 is a diagram showing an essential configuration of an abnormal signal detection section 1700 of the present embodiment, where the same components as those of the abnormal signal detection section 1500 shown in FIG.15 are assigned the same reference numerals and their explanations are omitted. The abnormal signal detection section 1700 is composed of a first storage section 2041, a first comparison section 1501, a first timer 1502, a first counter 1503, a second storage section 1504, a third comparison section 1505, a calculation section 1506, a buffer 1701, a second comparison section 1702, a second timer 1703, and a second counter 1704.

The buffer 1701 temporarily holds a count value 1 which is input from the first counter 1503 and outputs the held count value 1 to the second comparison section 1702 and the control section 203 in FIG. 1, when a comparison detection signal 2 is input from the second comparison section 1702. The second comparison section 1702 compares the current count value 1 which is input from the first counter 1503 to the previous count value 1 which is input from the buffer 1701 and outputs a comparison detection signal 2 to the second counter 1704 if the current count value 1 exceeds the previous count value 1.

The second timer 1703 measures the time that sets the operation cycle of the second counter 1704 and outputs the second measurement time to the second counter 1704. The measurement time set by the first timer 1502 is referred to as the first measurement time. The relationship between the first measurement time and the second measurement time is "the first measurement time < the second measurement time." The second counter 1704 counts comparison detection signals 2 which are input from the second comparison section1702 within the second measurement time which is input from the second timer 1703 and outputs the count value 2 to the third comparison section1505 and the control section 203 in FIG.1.

The third comparison section1505 compares the count value 2 which is input from the second counter 1704 to the threshold 2 stored in the second storage section 1504 and outputs an abnormality detection signal to the control section 203 in FIG. 1 if the count value 2 is greater than or equal to the threshold 2.

The control section 203 outputs the abnormality detection signal, the count value 1, the count value 2, and the maximum value and average value of the electromagnetic signal level, which are input from the abnormal signal detection section 1700, to the wireless communications section 202, and transmits them from the wireless communications section 202 to the earthquake prediction apparatus 400 via the base station 500 and the network N.

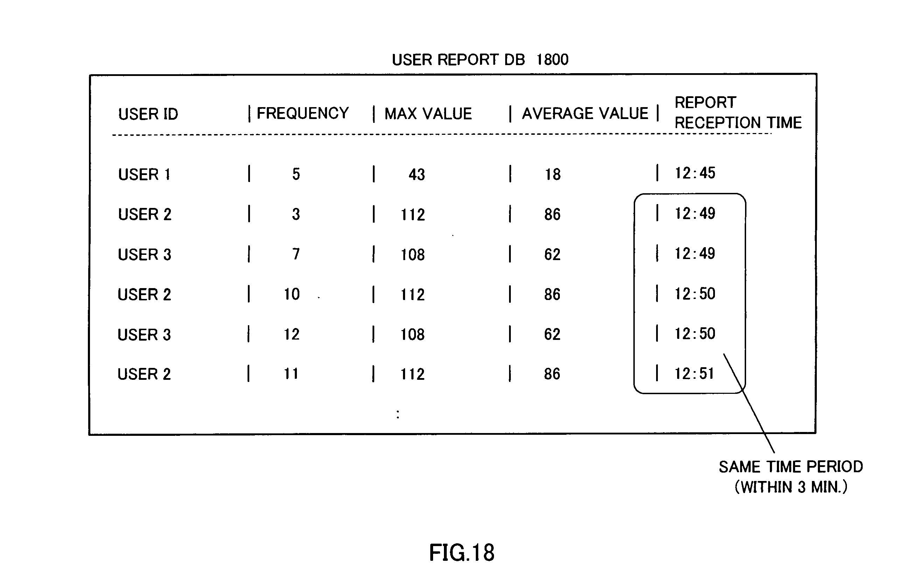

The earthquake prediction apparatus 400 receives the abnormality detection signal, count value 1, count value 2, and maximum value and average value of the electromagnetic signal level, which are output by the abnormal signal detection section 1700, from the mobile terminal 200 by the communications section 401, and, upon receiving user management database information from the location management apparatus 300, stores that information in a user report database 1800 shown in FIG. 18 in the storage section 403 by the control section 402. In the user report database 1800 in FIG.18, "frequency" corresponds to the count value 1.

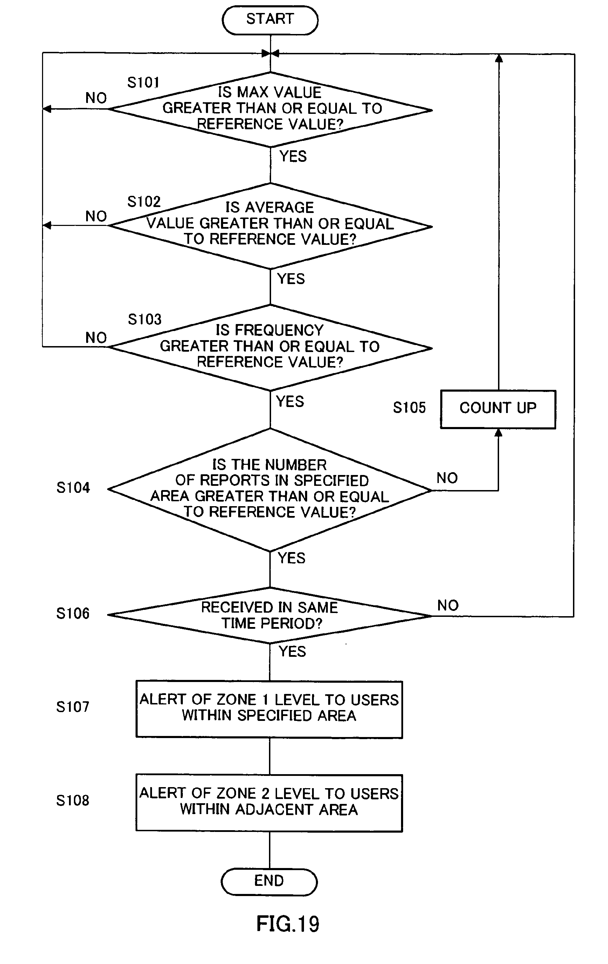

Next, an earthquake prediction process which is performed by the prediction section 404 of the earthquake prediction apparatus 400 will be described in reference to the flowchart shown in FIG.19. An earthquake prediction processing program corresponding to the earthquake prediction process flow shown in FIG.19 is stored in the storage section 403 of the earthquake prediction apparatus 400 and this program is read by the control section 402, output to the prediction section 404 and executed.

In FIG.19, the prediction section 404 determines whether the received maximum value of the electromagnetic signal level is greater than or equal to its reference value (step S101). If the maximum value is not greater than or equal to the reference value (step S101: NO), this process is executed repeatedly. If the maximum value is greater than or equal to the reference value (step S101: YES), the process goes to step S102 where it is determined whether the received average value of the electromagnetic signal level is greater than or equal to its reference value.

If the average value is not greater than or equal to the reference value (stepS102: NO), the process returns to step S101. If the average value is greater than or equal to the reference value (step S102: YES), the process goes to step S103 where it is determined whether the frequency of reception (count value 1) is greater than or equal to its reference value. If the frequency is not greater than or equal to the reference value (step S103: NO), the process returns to step S101. If the frequency is greater than or equal to the reference value (step S103: YES), the process goes to step S104.

At step S104, the prediction section 404 sets an area of prediction, according to the user management database information received from the location management apparatus 300, and determines whether the number of reports from a plurality of users in this set area of prediction is greater than or equal to the reference value. If the number of reports from within the area of prediction is not greater than or equal to the reference value (step S104: NO), the process goes to step S105 where it counts up the number of reports. If the number of reports from within the area of prediction is greater than or equal to the reference value (step S104: YES), the process goes to step S106.

At step S106, the prediction section 404 determines whether the reports counted were received in the same time period (e.g., within three minutes) in the user report database 1800 shown in FIG.18. If they were not received in the same time period (step S106: NO), the process returns to step S101. If they were received in the same time period (step S106: YES), the process goes to step S107.

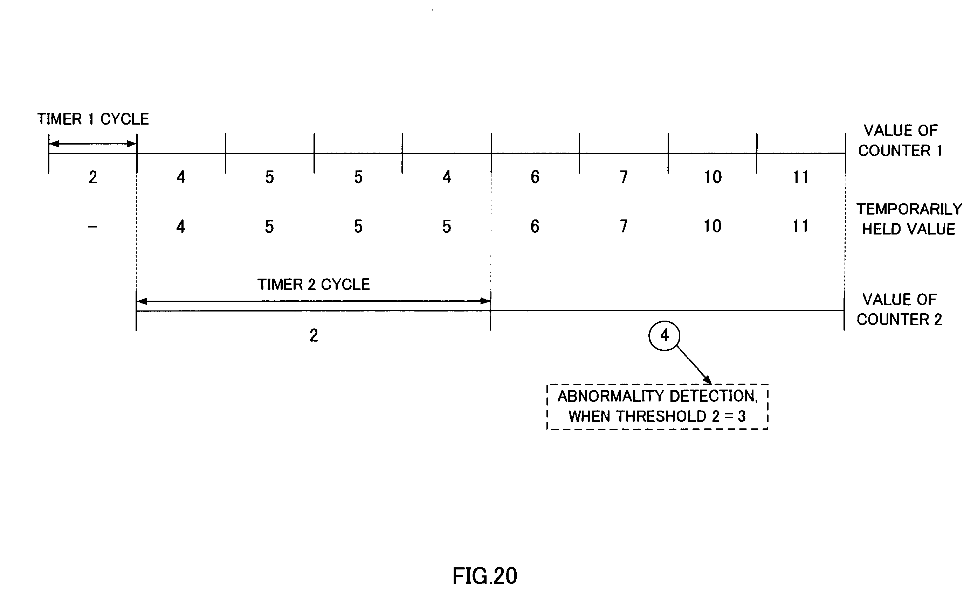

Here, the relationship among the count value 1, the value held by the buffer 1701 (previous count value 1), and the count value 2 in the mobile terminal 200 is shown in FIG.20. A timer 1 cycle which is shown in FIG.20 is the first measurement time which is set by the first timer 1502 and a timer cycle 2 is the second measurement time which is set by the second timer 1703. In this case, the count value 2 of the second counter 1704 within the timer cycle 2 is "2" and the count value 2 within the second timer cycle 2 is "4." Then, an abnormality detection signal is output because the threshold 2 is "3."

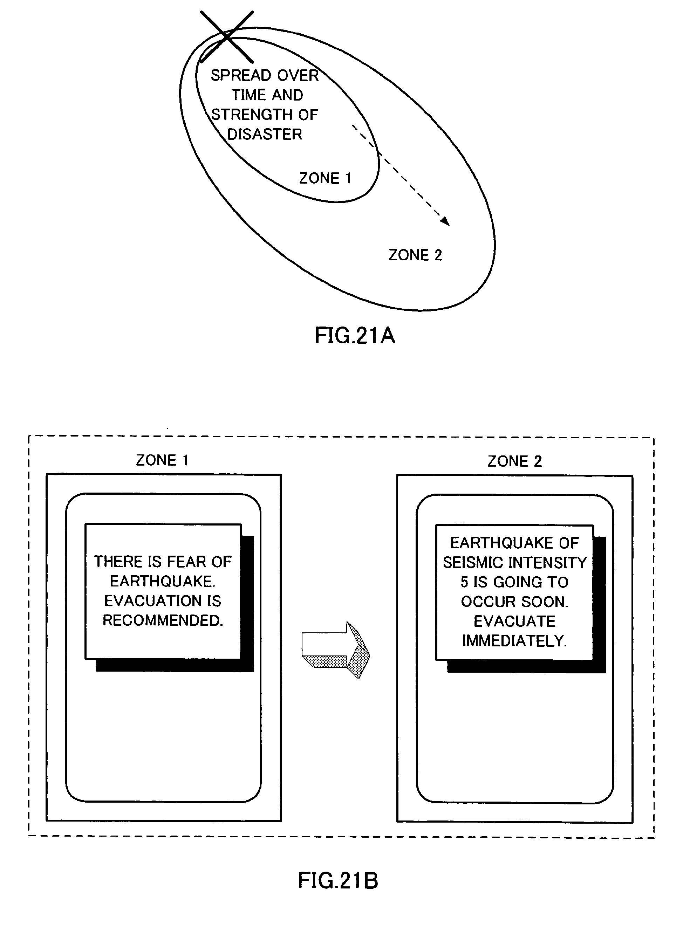

Then, the prediction section 404 generates an alert of zone 1 level to users in the set area of prediction at step S107, generates an alert of zone 2 level to users in an area adjacent to the area of prediction at step S108, and terminates this process. Concrete examples of these alerts are shown in FIG.21. In FIG.21, an instance is shown where alert messages indicating the disaster spreading over time and its strength are displayed to the users being in zone 1 that is the area of prediction and in zone 2 that is the adjacent area. For example, an alert "There is fear of earthquake. Evacuation is recommended." is displayed to the users in zone 1 and an alert "Earthquake of seismic intensity 5 is going to occur soon. Evacuate immediately." is displayed to the users in zone 2.

As described above, according to the disaster prediction system of the present embodiment, the mobile terminal 200 is equipped with functions for detecting an electromagnetic signal which correlates with earthquake occurrence and which comes from underground and detecting an abnormal electromagnetic signal and a function for locating the present position, the location management apparatus 300 manages location information for a plurality of mobile terminals 200, and the earthquake prediction apparatus 400 appropriately sets the areas of prediction of earthquake occurrence, according to the location management information, and collects a plurality of abnormality detection signals, count values 1, count values 2, and the maximum values and average values of the electromagnetic signal level from the plurality of mobile terminals 200, generates earthquake-relatedalert information based on analysis per area of prediction, and transmits that information to the mobile terminals 200. Consequently, it is possible to set more areas of prediction at ease and at low cost than conventional disaster prediction systems, improve the accuracy of disaster prediction, reliably alert the earthquake-related alert information to the users of the mobile terminals 200 being in the areas of prediction, and improve the reliability of the system.

According to the disaster prediction system of the present embodiment, the disaster prediction apparatus 400 is arranged to display alert messages indicating the disaster spreading over time and its strength to the adjacent area as well as the area of prediction. Consequently, it is possible to convey effective alert information to the users in not only the area of prediction but also in adjacent areas, and further improve the reliability of the system.

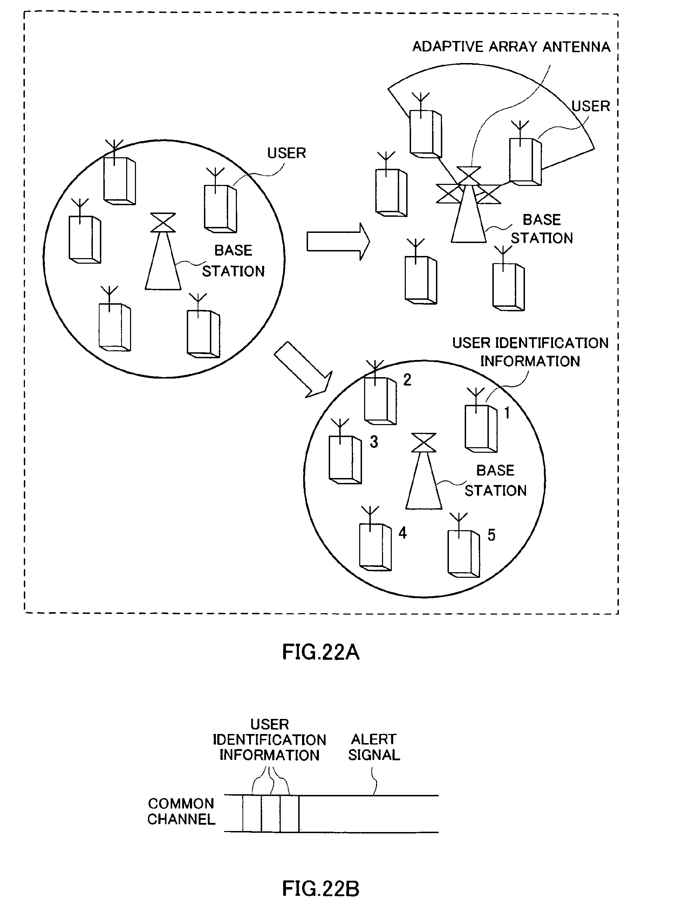

While the present positions of the mobile terminals are managed by the location management apparatus via the base station in the foregoing embodiments, an alternative method of location management may be taken, for example, as shown in FIG.22, in which adaptive array antenna is used at the base station and the present positions of the mobile terminals are managed for each segment of the adaptive array antenna. As a second method, if the coverage area of a base station is narrow, the position of the base station itself can be used and managed directly as the position of mobile terminals 200.

While the foregoing embodiments are designed to transmit alert information from the earth quake prediction apparatus individually to the mobile terminals via the base station, for example, as shown in FIG. 22, it is equally possible to set a plurality of user identification information of the mobile terminals in a common channel and transmit the alert information via the base station. Although cases have been described above with the foregoing embodiments where the occurrence of an earthquake is predicted as a disaster, the mobile terminal may be equipped with a detection function with regard to meteorological phenomena or the like, instead of the electromagnetic signal detection function, so that it is also possible to set areas of prediction, collect and analyze abnormality detection signals relating to meteorological disasters, predict the occurrence of meteorological disasters, and send alert information to the mobile terminals in the areas of prediction.

A first aspect of the disaster prediction system of the present invention is configured as a disaster prediction system in which a disaster prediction apparatus collects abnormality detection signals relating to a natural disaster from a plurality of mobile communications apparatuses via a wireless communications network and provides information related to the natural disaster analyzed by the disaster prediction apparatus to the mobile communications apparatuses via the wireless communications network, and this disaster prediction system employs a configuration having: the mobile communications apparatuses, each mobile communications apparatus comprising: a location detection section that locates a present position; an abnormal signal detection section that receives an electromagnetic signal coming from a natural world, detects an abnormal signal and outputs an abnormality detection signal; a first communications section that transmits the present position to a location management apparatus via the wireless communications network, transmits the abnormality detection signal to the disaster prediction apparatus via the wireless communications network, and receives the information related to the natural disaster from the disaster prediction apparatus via the wireless communications network; and an alerting section that alerts the information related to the natural disaster received by the first communications section; the location management apparatus receives present positions from the plurality of mobile communications apparatuses via the wireless communications network and manages location information of each mobile communications apparatus; and the disaster prediction apparatus, comprising: a second communications section that receives abnormality detection signals from the plurality of mobile communications apparatuses via the wireless communications network, receives the location information of each mobile communications apparatusfrom the location management apparatus via the wireless communications network, and transmits the information related to the natural disaster to the plurality of mobile communications apparatuses via the wireless communications network; a disaster prediction section that collects and analyzes the abnormality detection signals received from the plurality of mobile communications apparatuses per area based on the location information and predicts occurrence of the natural disaster per area; and an information generating section that generates the information related to the natural disaster based on results of prediction by the disaster prediction section.

According to this configuration, it is possible to set more areas of prediction at ease and at low cost than conventional disaster prediction systems, improve the accuracy of disaster prediction, reliably send earthquake-related alert information to the users of the mobile communications apparatuses, and improve the reliability of the system.

A second aspect of the disaster prediction system of the present invention is configured such that, in the disaster prediction system of the above first aspect, the disaster prediction section sets areas of prediction based on the location information of each mobile communications apparatus managed by the location management apparatus, collects and analyses the abnormality detection signals received from the plurality of mobile communications apparatuses and predicts occurrence of the natural disaster per area of prediction; and the information generating section generates alert information based on a result of prediction per area of prediction by the disaster prediction section.

According to this configuration, areas of prediction can be set freely, based on the location information for a plurality of mobile communications apparatus, and therefore, a flexible disaster prediction system that is unprecedented can be built at low cost and at ease.

A third aspect of the disaster prediction system of the present invention is configured such that, in the disaster prediction system of the above first aspect, the abnormal signal detection section comprises a storage section that stores a threshold against which an electromagnetic signal level is compared; and a comparison section that compares the electromagnetic signal level to the threshold stored in the storage section and outputs an abnormality detection signal when the electromagnetic signal level exceeds the threshold.

According to this configuration, it is possible to improve the accuracy of disaster occurrence prediction and alert more reliable alert information to the users in the areas of prediction.

A fourth aspect of the disaster prediction system of the present invention is configured such that, in the disaster prediction system of the above first aspect, the abnormal signal detection section comprises: a first storage section that stores a first threshold against which an electromagnetic signal level is compared; a first comparison section that compares the electromagnetic signal level to the first threshold stored in the first storage section and outputs a first comparison detection signal when the electromagnetic signal level exceeds the first threshold; a counting section that counts the number of times the first comparison detection signal is output from the first comparison section in a set period of time; a second storage section that stores a second threshold against which a count value in the counting section is compared; a second comparison section that compares the count value to the second threshold stored in the second storage section and outputs an abnormality detection signal when the count value exceeds the second threshold; and a calculation section that calculates and outputs a maximum value and average value of the electromagnetic signal level in the set period of time; the second communications section transmits the abnormality detection signal output from the second comparison section and the maximum value and average value of the electromagnetic signal level output from the calculation section to the disaster prediction apparatus via the wireless communications network; the second communications section receives abnormality detection signals and maximum values and average values of the electromagnetic signal level from the plurality of mobile communications apparatuses via the wireless communications network; and the disaster prediction section collects and analyzes the abnormality detection signals and the maximum values and average values of the electromagnetic signal level received from the plurality of mobile communications apparatuses per area of prediction and predicts occurrence of the natural disaster per area of prediction.

According to this configuration, it is possible to improve the accuracy of disaster occurrence prediction and alert more reliable alert information to the users in the areas of prediction.

A fifth aspect of the disaster prediction system of the present invention is configured such that, in the disaster prediction system of the above fourth aspect, the disaster prediction section determines whether the frequency of receiving the abnormality detection signals from the plurality of mobile communications apparatuses and the maximum values and average values of the electromagnetic signal level are greater than or equal to respective reference values, determines whether the number of reports of abnormality detection signals from each area of prediction is greater than or equal to a reference value, determines whether the reports greater than or equal to the reference value have been received in a same time period, and predicts occurrence of the natural disaster per area of prediction based on results of these determinations.

According to this configuration, it is possible to improve the accuracy of disaster occurrence prediction and alert more reliable alert information to the users in the areas of prediction.

A sixth aspect of the disaster prediction system of the present invention is configured as a disaster prediction system in which a disaster prediction apparatus collects abnormality detection signals relating to a natural disaster from a plurality of mobile communications apparatuses via a wireless communications base station and a communications network and provides information related to the natural disaster analyzed by the disaster prediction apparatus to the mobile communications apparatuses via the communications network and the wireless communications base station, and this disaster prediction system employs a configuration having: the mobile communications apparatuses, each mobile communication apparatus comprising: an abnormal signal detection section that receives an electromagnetic signal coming from a natural world, detects an abnormal signal and outputs an abnormality detection signal; a first communications section that transmits the abnormality detection signal to the wireless communications base station and receives the information related to the natural disaster from the disaster prediction apparatus via the communications network and the wireless communications base station; and an alerting section that alerts the information related to the natural disaster received by the first communications section; a wireless communications base station that manages communications with a plurality of mobile communications in a coverage area of the wireless communications base station and communications with the disaster prediction apparatus and a location management apparatus and transmits location information managed by the wireless communications base station to the location management apparatus via the communications network; the location management apparatus that receives the location information from the wireless communications base station via the communications network and manages the location information; and the disaster prediction apparatus, comprising: a second communications section that receives abnormality detection signals from the plurality of mobile communications apparatuses via the communications network and the wireless communications base station, receives the location information from the location management apparatus via the communications network, and transmits information related to the natural disaster to the plurality of mobile communications apparatus via the communications network and the wireless communications base station; a disaster prediction section that collects and analyzes abnormality detection signals received from the plurality of mobile communications apparatuses per area based on the location information and predicts occurrence of the natural disaster per area; and an information generating section that generates the information related to the natural disaster based on results of prediction by the disaster prediction section.

According to this configuration, it is possible to set more areas of prediction at ease and at low cost than conventional disaster prediction systems, improve the accuracy of disaster prediction, reliably send earthquake-related alert information to the users of the mobile communications apparatus, and improve the reliability of the system. If the coverage area of a base station is narrow, the position of the base station itself can be directly taken as the positions of a plurality of mobile communications apparatuses communicating with the base station and its location information can be managed.

A seventh aspect of the disaster prediction system of the present invention is configured such that, in the disaster prediction system of the above first aspect, the alerting section comprises a vibration control section and a vibration section; and the vibration control section changes a strength or cycle of vibration of the vibration section in accordance with the received information related to the natural disaster.

According to this configuration, the users in the areas of prediction can be alerted to the alert information by vibration.

An eighth aspect of the disaster prediction system of the present invention is configured such that, in the disaster prediction system of the above first aspect, the alerting section comprises a flash cycle/light emission intensity adjusting section and a light emission section; and the flash cycle/light emission intensity adjusting section changes the flash cycle or light emission intensity of the light emission section in accordance with the received information related to the natural disaster.

According to this configuration, the users in the areas of prediction can be alerted to the alert information by light.

A ninth aspect of the disaster prediction system of the present invention is configured such that, in the disaster prediction system of the above first aspect, the alerting section comprises a sound information storage section, a sound reproduction section, a volume adjusting section and a sound emission section; and the sound reproduction section selects sound information stored in the sound information storage section in accordance with the received information related to the natural disaster, outputs a reproduced sound signal and a volume adjustment signal to the volume adjusting section and adjusts the volume of the reproduced sound.

According to this configuration, the users in the areas of prediction can be alerted to the alert information by sound.

A tenth aspect of the disaster prediction system of the present invention is configured such that, in the disaster prediction system of the above first aspect, the alerting section comprises an image information storage section, an image reproduction section and a display section; and the image reproduction section selects image information stored in the image storage section in accordance with the received information related to the natural disaster, outputs an image reproduction signal to the display section and displays a reproduced image.

According to this configuration, the users in the areas of prediction can be alerted to the alert information by images.

The present specification is based on Japanese Patent Application 2003-372815, filed on October 31, 2003, the entire content of which is expressly incorporated herein by reference.

### Industrial Applicability

The present invention sets areas of prediction of natural disasters using mobile communications apparatus, makes it easy to set more areas of prediction, and makes it possible to improve the accuracy of natural disaster occurrence prediction.

## Claims

1. A disaster prediction system in which a disaster prediction apparatus collects abnormality detection signals relating to a natural disaster from a plurality of mobile communications apparatuses via a wireless communications network and provides information related to the natural disaster analyzed by the disaster prediction apparatus to the mobile communications apparatuses via the wireless communications network, the disaster prediction system comprising:
saidmobile communications apparatuses, eachmobile communications apparatus comprising:
a location detection section that locates a present position;
an abnormal signal detection section that receives an electromagnetic signal coming from a natural world, detects an abnormal signal and outputs an abnormality detection signal;
a first communications section that transmits the present position to a location management apparatus via the wireless communications network, transmits the abnormality detection signal to the disaster prediction apparatus via the wireless communications network, and receives the information related to the natural disaster from the disaster prediction apparatus via the wireless communications network; and
an alerting section that alerts the information related to the natural disaster received by the first communications section;
the location management apparatus receives present positions from the plurality of mobile communications apparatuses via the wireless communications network and manages location information of each mobile communications apparatus; and
said disaster prediction apparatus, comprising:
a second communications section that receives abnormality detection signals from the plurality of mobile communications apparatuses via the wireless communications network, receives the location information of each mobile communications apparatus from the location management apparatus via the wireless communications network, and transmits the information related to the natural disaster to the plurality of mobile communications apparatuses via the wireless communications network;
a disaster prediction section that collects and analyzes the abnormality detection signals received from the plurality of mobile communications apparatuses per area based on the location information and predicts occurrence of the natural disaster per area; and
an information generating section that generates the information related to the natural disaster based on results of prediction by the disaster prediction section.

2. The disaster prediction system according to claim 1, wherein:
the disaster prediction section sets areas of prediction based on the location information of each mobile communications apparatus managed by the location management apparatus, collects and analyses the abnormality detection signals received from the plurality of mobile communications apparatuses and predicts occurrence of the natural disaster per area of prediction; and
the information generating section generates alert information based on a result of prediction per area of prediction by the disaster prediction section.

3. The disaster prediction system according to claim 1, wherein the abnormal signal detection section comprises:
a storage section that stores a threshold against which an electromagnetic signal level is compared; and
a comparison section that compares the electromagnetic signal level to the threshold stored in the storage section and outputs an abnormality detection signal when the electromagnetic signal level exceeds the threshold.

4. The disaster prediction system according to claim 1, wherein the abnormal signal detection section comprises:
a first storage section that stores a first threshold against which an electromagnetic signal level is compared;
a first comparison section that compares the electromagnetic signal level to the first threshold stored in the first storage section and outputs a first comparison detection signal when the electromagnetic signal level exceeds the first threshold;
a counting section that counts the number of times the first comparison detection signal is output from the first comparison section in a set period of time;
a second storage section that stores a second threshold against which a count value in the counting section is compared;
a second comparison section that compares the count value to the second threshold stored in the second storage section and outputs an abnormality detection signal when the count value exceeds the second threshold; and
a calculation section that calculates and outputs a maximum value and average value of the electromagnetic signal level in the set period of time;
the second communications section transmits the abnormality detection signal output from the second comparison section and the maximum value and average value of the electromagnetic signal level output from the calculation section to the disaster prediction apparatus via the wireless communications network;
the second communications section receives abnormality detection signals and maximum values and average values of the electromagnetic signal level from the plurality of mobile communications apparatuses via the wireless communications network; and
the disaster prediction section collects and analyzes the abnormality detection signals and the maximum values and average values of the electromagnetic signal level received from the plurality of mobile communications apparatuses per area of prediction and predicts occurrence of the natural disaster per area.

5. The disaster prediction system according to claim 4, wherein the disaster prediction section determines whether the frequency of receiving the abnormality detection signals from the plurality of mobile communications apparatuses and the maximum values and average values of the electromagnetic signal level are greater than or equal to respective reference values, determines whether the number of reports of abnormality detection signals from each area of prediction is greater than or equal to a reference value, determines whether the reports greater than or equal to the reference value have been received in a same time period, and predicts occurrence of the natural disaster per area of prediction based on results of these determinations.

6. A disaster prediction system in which a disaster prediction apparatus collects abnormality detection signals relating to a natural disaster from a plurality of mobile communications apparatuses via a wireless communications base station and a communications network and provides information related to the natural disaster analyzed by the disaster prediction apparatus to the mobile communications apparatuses via the communications network and the wireless communications base station, said disaster prediction system comprising:
said mobile communications apparatuses, eachmobile communication apparatus comprising:
an abnormal signal detection section that receives an electromagnetic signal coming from a natural world, detects an abnormal signal and outputs an abnormality detection signal;
a first communications section that transmits the abnormality detection signal to the wireless communications base station and receives the information related to the natural disaster from the disaster prediction apparatus via the communications network and the wireless communications base station; and
an alerting section that alerts the information related to the natural disaster received by the first communications section;
a wireless communications base station that manages communications with a plurality of mobile communications in a coverage area of the wireless communications base station and communications with the disaster prediction apparatus and a location management apparatus and transmits location information managed by the wireless communications base station to the location management apparatus via the communications network;
the location management apparatus that receives the location information from the wireless communications base station via the communications network and manages the location information; and
the disaster prediction apparatus, comprising:
a second communications section that receives abnormality detection signals from the plurality of mobile communications apparatuses via the communications network and the wireless communications base station, receives the location information from the location management apparatus via the communications network, and transmits information related to the natural disaster to the plurality of mobile communications apparatus via the communications network and the wireless communications base station;
a disaster prediction section that collects and analyzes abnormality detection signals received from the plurality of mobile communications apparatuses per area based on the location information and predicts occurrence of the natural disaster per area; and
an information generating section that generates the information related to the natural disaster based on results of prediction by the disaster prediction section.

7. The disaster prediction system according to claim 1, wherein:
the alerting section comprises a vibration control section and a vibration section; and
the vibration control section changes a strength or cycle of vibration of the vibration section in accordance with the received information related to the natural disaster.

8. The disaster prediction system according to claim 1, wherein:
the alerting section comprises a flash cycle/light emission intensity adjusting section and a light emission section; and
the flash cycle/light emission intensity adjusting section changes the flash cycle or light emission intensity of the light emission section in accordance with the received information related to the natural disaster.

9. The disaster prediction system according to claim 1, wherein:
the alerting section comprises a sound information storage section, a sound reproduction section, a volume adjusting section and a sound emission section; and
the sound reproduction section selects sound information stored in the sound information storage section in accordance with the received information related to the natural disaster, outputs a reproduced sound signal and a volume adjustment signal to the volume adjusting section and adjusts the volume of the reproduced sound.

10. The disaster prediction system according to claim 1, wherein:
the alerting section comprises an image information storage section, an image reproduction section and a display section; and
the image reproduction section selects image information stored in the image storage section in accordance with the received information related to the natural disaster, outputs an image reproduction signal to the display section and displays a reproduced image.
